# EUROPÄISCHE PATENTANMELDUNG

(11) **EP 3 020 279 A1**
(43) Veröffentlichungstag der Anmeldung: **18.05.2016**
(21) Anmeldenummer: 14192683.2
(22) Anmeldetag: 11.11.2014
(51) Int. Cl.: A01N 25/18, A01N 37/02, A01N 25/26

(54) **Partikel zur Freisetzung von Wirkstoffen**

(71) Anmelder: Lithos Industrial Minerals GmbH, 4482 Ennsdorf (AT)
(72) Erfinder: Rametsteiner, Karl, 4040 Linz (AT)
(74) Vertreter: KLIMENT & HENHAPEL

(57) **Zusammenfassung**

Die vorliegende Erfindung betrifft Partikel (1) mit steuerbarer Freisetzung eines Pflanzenschutzwirkstoffs, wobei
a) das Partikel (1) einen mit einer oder mehreren Schichten (4, 6) umhüllten Kern (2) aufweisen und
b) der Kern (2) und mindestens eine den Kern (2) umhüllende Schicht (4, 6) mindestens einen freizusetzenden Pflanzenschutzwirkstoff umfasst, wobei der Kern (2) und/oder mindestens eine den Kern (2) umhüllende Schicht (4, 6) ein Substrat zur Bindung oder zur Aufnahme des mindestens einen freizusetzenden Wirkstoffs umfasst, wobei das Substrat in der Lage ist, den aufgenommenen Wirkstoff zeitlich verzögert abzugeben.

## Beschreibung

Die vorliegende Erfindung betrifft Partikel mit steuerbarer Freisetzung eines Pflanzenschutzwirkstoffs.

Die Anforderungen, welche an Pflanzenschutzmittel gestellt werden, sind sehr vielfältig. Einerseits müssen die in Pflanzenschutzmittel enthaltenen Wirkstoffe in der Lage sein Pflanzenschädlinge möglichst effizient zu bekämpfen, andererseits sollen die Wirkstoffe möglichst geringe bis gar keine Nebenwirkungen aufweisen. Ein weiteres Erfordernis an Pflanzenschutzmittel ist die Wirkungsdauer. Die Wirkungsdauer eines ausgebrachten Pflanzenschutzmittels hat einen unmittelbaren Einfluss auf den Arbeitsaufwand und somit auf die Kosten für den Pflanzenschutz. Es ist daher wünschenswert Pflanzenschutzmittel einzusetzen, die u.a. eine verlängerte Abgabezeit des darin enthaltenen Pflanzenschutzwirkstoffs aufweisen.

Pflanzenschutzmittel werden großteils im Spritzverfahren auf landwirtschaftlichen Anbauflächen ausgebracht. Dies gilt sowohl für Präparate, die auf die zu kultivierenden Pflanzen selbst aufgebracht werden, als auch für Produkte die im bzw. über dem Boden ihre Wirkung entfalten sollen. Alternativ dazu können Pflanzenschutzmittel auch im Gießverfahren verwendet werden, jedoch sind hierbei große Flüssigkeits- und Wirkstoffmengen erforderlich. Derartige Ausbringungsverfahren weisen zudem den Nachtwill auf, dass die Wirkstoffe in tiefere Bodenschichten gelangen, wodurch die zu schützende Pflanze nur unzureichend mit dem Wirkstoff versehen werden kann und es zu einer Verunreinigung des Grundwassers kommt. Des Weiteren wird bei diesen Verfahren der Wirkstoff relativ rasch aus den zu behandelnden Bodenbereichen ausgewaschen, so dass nur ein sehr kurzfristiger Effekt des Pflanzenschutzmittels erreicht wird.

Um Pflanzenschädlinge von Kulturpflanzen zu bekämpfen bzw. von den Pflanzen fernzuhalten wird die Pheromon-Verwirrtechnik vielfach bei der Schädlingsbekämpfung eingesetzt.

Pheromone als sehr spezifische Sexuallockstoffe wirken im Allgemeinen auf ein Geschlecht, in seltenen Fällen auch auf beide Geschlechter und dienen als Semiochemikalien, also Botenstoffe, dazu, das Verhalten von Insekten zu steuern. So können beispielsweise von Weibchen ausgesandte Pheromone Männchen anlocken. Durch Empirie ausgewählte, eventuell auch künstlich hergestellte, Pheromone, können damit auch zum Anlocken von Männchen in Insektenfallen eingesetzt werden. Zielführender aber ist es (Erfolgsrate bis zu 80%), geeignete Pheromone flächendeckend aufzubringen, um das Auffinden von Weibchen in diesem Gebiet weitgehend zu verhindern, weil dann die überwiegende Mehrzahl der Pheromonquellen nicht einem Weibchen zugeordnet sind. Dieses auf eine Irreführung der männlichen Insekten zurückgehende Konfusionsverfahren kann somit die Vermehrung eines Schädlings in einem vorgegebenen Gebiet, in umweltschonender Art, auf ein nicht mehr den Ertrag störendes Maß beschränken. Es muss nur gelingen, die auf einen Schädling spezifisch abgestimmten Pheromone im Rahmen der zu schützenden Anbaufläche in einem für die Konfusion des Schädlings ausreichendem Ausmaß zu verteilen. Darüber hinaus ist die Abgabe dieser Pheromone über eine Zeitspanne zu gewährleisten, innerhalb der zu bekämpfenden Schädlinge sexuell aktiv sind.

Pheromone sind einerseits in äußerst geringen Konzentrationen (ng/m³ Luft) wirksam und haben andererseits, als notwendigerweise flüchtige Chemikalien, nur eine beschränkte Wirkdauer. Diese orientiert sich in der Praxis auf die Zeitspanne zwischen Applikation in den Bedarfsraum (Boden, Wald, Feld, Glashaus...) und der damit einsetzenden Verdünnung/Verflüchtigung zu einer nicht mehr wirksamen Konzentration.

Wie erwähnt, ist die Paarungsbereitschaft in der Regel zeitlich eng limitiert und korreliert nicht unbedingt mit der ebenfalls zeitlich limitierten Möglichkeit der Ausbringung des Pflanzenschutzmittels. So mag es beispielsweise notwendig werden, die Pheromone bereits mit dem Saatgut in den Boden einzubringen, obwohl die Paarungszeit der Insekten erst einige Wochen/Monate später beginnt und möglicherweise mit der Blüte der Pflanzen zusammenhängt. Um diesen Nachteil zu umgehen, ist es von Vorteil, wenn das eingesetzte Pflanzenschutzmittel in der Lage ist, über einen bestimmten Zeitraum den entsprechenden Pflanzenschutzwirkstoff, insbesondere Pheromone, an die Umwelt abzugeben.

So wird beispielsweise in der EP 1 064 843 beschrieben spezifische Pheromone an synthetische Zeolithe zu absorbieren, so dass die Pheromone über einen längeren Zeitraum an die Umwelt abgegeben werden. Die Ausbringung der Zeolithe kann dabei in Form von Pulver, Granulaten und Konglomeraten erfolgen.

In der EP 1 676 480 wird vorgeschlagen, Pheromone generell in kristalline Mineralien in einer Konzentration von 1-30 Masseprozent einzubetten, wobei Silikate wie Montmorillonite, Palygorskite und Sepiolite als besonders geeignet angesehen werden.

In der AT 508 914 wird die Herstellung eines mit Pheromonen imprägnierten Präparats beschrieben, bei dem der Wassergehalt eines Zeoliths vor Einbringung des Pheromons abgesenkt wird.

Anstelle von Mineralien (in der Regel Silikate) wurde in der Literatur auch vorgeschlagen, zur Bindung von Pheromonen Cyklodextrine einzusetzen.

Die US 5,650,160 schlägt vor, bestimmte Pheromone in Cyklodextrin einzubringen, wobei speziell an der Hydroxylgruppe methylierte Cyklodextrine vorgeschlagen werden.

In der US 2013/0096207 wird eine Kombination von in Cyklodextrin eingebettetem Pheromon in Kombination mit freiem Cyklodextrin und einem wasserlöslichen Polymer vorgeschlagen. Aufgrund der hohen Kosten von Cyklodextrinen ist Verwendung von nicht mit Pheromonen versetzen Cyklodextrin wirtschaftlich besonders nachteilig.

Eine Aufgabe der vorliegenden Erfindung ist es, Mittel umfassend Pflanzenschutzwirkstoffe bereitzustellen, die eine konstantere Wirkstofffreisetzung über einen längeren Zeitraum ermöglichen als jene Mittel, die aus dem Stand der Technik bekannt sind. Zudem soll das erfindungsgemäße Mittel Pflanzenwirkstoffe in einer für die Landwirtschaft optimierten Form binden, um die Lagerbeständigkeit des Pflanzenschutzmittels zu gewährleisten, um einen möglichen Abfall der Wirksamkeit zu verhindern bzw. zu reduzieren.

Die vorliegende Erfindung betrifft daher Partikel mit steuerbarer Freisetzung eines Pflanzenschutzwirkstoffs, wobei
a) das Partikel einen mit einer oder mehreren Schichten umhüllten Kern aufweist und
b) der Kern und mindestens eine den Kern umhüllende Schicht mindestens einen freizusetzenden Pflanzenschutzwirkstoff umfasst, wobei der Kern und/oder mindestens eine den Kern umhüllende Schicht ein Substrat zur Bindung oder zur Aufnahme des mindestens einen freizusetzenden Wirkstoffs umfasst, wobei das Substrat in der Lage ist, den aufgenommenen Wirkstoff zeitlich verzögert abzugeben.

Es hat sich erfindungsgemäß gezeigt, dass die Freisetzung von Pflanzenwirkstoffen aus Partikel über einen bestimmten Zeitraum besser steuerbar ist, wenn der Kern des Partikels mit mindestens einer Schicht umhüllt ist und sowohl der Kern als auch dessen umhüllende Schicht ein Pflanzenschutzwirkstoff umfasst. Dadurch ist es möglich einen oder mehrere Pflanzenschutzwirkstoffe über einen längeren Zeitraum an die Umwelt abzugeben. Zudem kann gesteuert werden in welcher Reihenfolge die einzelnen Wirkstoffe freigesetzt werden. Erfindungsgemäß können Substrate eingesetzt werden, in denen der mindestens eine Pflanzenschutzwirkstoff adsorbiert, eingebettet usw. werden kann, um diesen anschließend über einen bestimmten Zeitraum wieder abzugeben. Die mindestens eine den Kern umhüllende Schicht kann beispielsweise die Diffusion des mindestens einen Wirkstoffs und somit dessen Abgabe verlangsamen. Umfasst der Kern und/oder die den Kern umhüllende Schicht, beispielsweise, ein biologisch abbaubares Substrat hängt die Geschwindigkeit und die zeitliche Abfolge der Freisetzung des mindestens einen Pflanzenschutzwirkstoffes nicht nur von der langsamen physikalischen Diffusion des Wirkstoffes aus dem Substrat ab. Der zeitliche Ablauf der Freisetzung des mindestens einen Wirkstoffes wird in einem derartigen Fall auch durch den biokatalytischen Abbau des Substrats beeinflusst (z.B. Hydrolyse von Cyclodextrinen).

Der Kern und/oder mindestens eine den Kern umhüllende Schicht der erfindungsgemäßen Partikel umfasst ein Substrat zur Bindung oder zur Aufnahme des mindestens einen freizusetzenden Wirkstoffs, das in der Lage ist, den aufgenommenen Wirkstoff zeitlich verzögert abzugeben. Derartige Substrate und Verfahren zu deren Herstellung sind in der Fachwelt hinreichend bekannt.

"Partikel", wie hierin verwendet, bezieht sich auf feste Partikel, die jegliche Form aufweisen können und vorzugsweise maximal 1 cm groß sind. Die erfindungsgemäßen Partikel weisen einen Kern auf, welcher ein definiertes Substrat umfasst, wobei der Kern von mindestens einer Schicht zumindest teilweise umhüllt ist.

"Pflanzenschutzwirkstoff", wie hierin verwendet, kann jede Substanz sein, die in der Lage bzw. deren Wirkung es ist, dem Befall einer Pflanze durch Schädlinge jeglicher Art vorzubeugen oder den Schädling abzuwehren, abzuschrecken, zu vernichten oder auf andere Weise den von ihm verursachten Schaden zu verringern.

Pflanzenschädlinge können zu verschiedenen Gruppen von Lebewesen gehören. Unter den höheren Tieren sind insbesondere bestimmte Arten von Insekten und Milben zu finden, ferner Nematoden und Schnecken. Auch Wirbeltiere wie Säuger und Vögel können Pflanzen bzw. Pflanzenkulturen beträchtlichen Schaden zuführen. Weitere Pflanzenschädlinge sind Mikroben, wie Pilze und Bakterien, Mykoplasmen und Viren. Dementsprechend umfasst der Begriff des "Pflanzenwirkstoffs" Pestizide, insbesondere Avizide, Acarizide, Bakterizide, Fraßhemmer, Fungizide, Insektenlockstoffe (Pheromone), Insektizide, Insektenabschreckmittel, Molluskizide, Nematizide, Paarungsverhinderer ("mating disrupters") und Rodentizide. Bevorzugte Pflanzenschutzwirkstoffe sind erfindungsgemäß aus der Gruppe der Fungizide und Insektizide ausgewählt (siehe z.B. "Wirkstoffe in Pflanzenschutz- und Schädlingsbekämpfungsmitteln" von Chemie-Wirtschaftsförderungs-Gesellschaft erschienen 2002 im BLV Verlag).

"Zeitlich verzögert" abgeben, wie hier verwendet, bedeutet, dass der Pflanzenschutzwirkstoff möglichst gleichmäßig über einen bestimmten Zeitraum (Minuten, Stunden, Tage, Wochen) an die Umwelt abgegeben wird. Im Sinne der Erfindung wird unter "zeitlich verzögert" verstanden, dass der mindestens eine Pflanzenwirkstoff zu höchstens 50% in 24, vorzugsweise 48, noch mehr bevorzugt in 72, noch mehr bevorzugt in 96, noch mehr bevorzugt in 120, noch mehr bevorzugt in 144, noch mehr bevorzugt in 168, noch mehr bevorzugt in 336, noch mehr bevorzugt in 504, Stunden, bevorzugt höchstens 75% in 24, vorzugsweise 48, noch mehr bevorzugt in 72, noch mehr bevorzugt in 96, noch mehr bevorzugt in 120, noch mehr bevorzugt in 144, noch mehr bevorzugt in 168, noch mehr bevorzugt in 336, noch mehr bevorzugt in 504, Stunden, besonders bevorzugt höchstens 80% in 24, vorzugsweise 48, noch mehr bevorzugt in 72, noch mehr bevorzugt in 96, noch mehr bevorzugt in 120, noch mehr bevorzugt in 144, noch mehr bevorzugt in 168, noch mehr bevorzugt in 336, noch mehr bevorzugt in 504, Stunden aus dem Partikel oder aus dem Kern oder aus der mindestens einen den Kern umhüllenden Schicht freigesetzt wird. Alternativ wird der erfindungsgemäße Pflanzenschutzwirkstoff in 24, vorzugsweise 48, noch mehr bevorzugt in 72, noch mehr bevorzugt in 96, noch mehr bevorzugt in 120, noch mehr bevorzugt in 144, noch mehr bevorzugt in 168, noch mehr bevorzugt in 336, noch mehr bevorzugt in 504, Stunden vorzugsweise zwischen 30 und 95%, bevorzugt zwischen 30 und 90%, noch mehr bevorzugt zwischen 30 und 80%, noch mehr bevorzugt zwischen 40 und 80%, aus dem Partikel oder aus dem Kern oder aus der mindestens einen den Kern umhüllenden Schicht freigesetzt.

In vielen Fällen ist es erforderlich Pflanzenschutzmittel vor dem Keimen der Kulturpflanzen, unmittelbar danach oder bevor die Kulturpflanzen eine bestimmte Größe erreicht haben, auf dem Feld auszubringen. Der Zeitraum zwischen der Ausbringung der erfindungsgemäßen Partikel und der Paarungszeit der Insekten kann sich über einen Zeitraum von 15 Tagen bis 6 Monaten, insbesondere von 1 bis 3 Monaten, erstrecken (je nach Insektenart unterschiedlich). Dieser Zeitraum muss überbrückt werden, und zwar derart, dass eine möglichst gleichmäßige Freigabe der Pflanzenschutzwirkstoffe, insbesondere von Pheromonen, über diesen Zeitraum erfolgt, um auch zum letzten Zeitpunkt noch eine wirksame Konzentration aufzuweisen. In diesem Zeitraum muss der Pflanzenwirkstoff möglichst gleichmäßig "zeitlich verzögert" abgegeben werden, so dass eine möglichst konstante Menge an Pflanzenwirkstoff über diesem Zeitraum freigesetzt wird.

Gemäß einer bevorzugten Ausführungsform der vorliegenden Erfindung wird der mindestens eine Pflanzenschutzwirkstoff über einen Zeitraum von 6 Monaten, vorzugsweise von 5 Monaten, noch mehr bevorzugt von 4 Monaten, noch mehr bevorzugt von 3 Monaten, noch mehr bevorzugt von 60 Tagen, noch mehr bevorzugt von 50 Tagen, noch mehr bevorzugt von 40 Tagen, noch mehr bevorzugt von 30 Tagen, noch mehr bevorzugt von 20 Tagen, noch mehr bevorzugt von 15 Tagen, freigesetzt. Erfindungsgemäß ist es besonders bevorzugt, dass der Pflanzenschutzwirkstoff über einen Zeitraum von 1 bis 200 Tagen, vorzugsweise von 5 bis 150 Tagen, noch mehr bevorzugt von 10 bis 90 Tagen, kontinuierlich an die Umwelt abgegeben, d.h. freigesetzt, wird

Der Durchmesser bzw. die Größe der erfindungsgemäßen Partikel liegt vorzugsweise zwischen 0,1 µm und 10 mm, noch mehr bevorzugt zwischen 0,1 µm und 5 mm, noch mehr bevorzugt zwischen 0,1 µm und 3 mm, noch mehr bevorzugt zwischen 0,1 µm und 2 mm, noch mehr bevorzugt zwischen 0,1 µm und 1 mm, noch mehr bevorzugt zwischen 0,1 µm und 500 µm, noch mehr bevorzugt zwischen 0,1 µm und 200 µm, noch mehr bevorzugt zwischen 0,1 µm und 100 µm, noch mehr bevorzugt zwischen 0,1 µm und 50 µm, noch mehr bevorzugt zwischen 0,1 µm und 25 µm, noch mehr bevorzugt zwischen 0,5 µm und 5 mm, noch mehr bevorzugt zwischen 0,5 µm und 3 mm, noch mehr bevorzugt zwischen 0,5 µm und 2 mm, noch mehr bevorzugt zwischen 0,5 µm und 1 mm, noch mehr bevorzugt zwischen 0,5 µm und 500 µm, noch mehr bevorzugt zwischen 0,5 µm und 200 µm, noch mehr bevorzugt zwischen 0,5 µm und 100 µm, noch mehr bevorzugt zwischen 0,5 µm und 50 µm, noch mehr bevorzugt zwischen 0,5 µm und 25 µm, noch mehr bevorzugt zwischen 1 µm und 5 mm, noch mehr bevorzugt zwischen 1 µm und 3 mm, noch mehr bevorzugt zwischen 1 µm und 2 mm, noch mehr bevorzugt zwischen 1 µm und 1 mm, noch mehr bevorzugt zwischen 1 µm und 500 µm, noch mehr bevorzugt zwischen 1 µm und 200 µm, noch mehr bevorzugt zwischen 1 µm und 100 µm, noch mehr bevorzugt zwischen 1 µm und 50 µm, noch mehr bevorzugt zwischen 1 µm und 25 µm, noch mehr bevorzugt zwischen 10 µm und 5 mm, noch mehr bevorzugt zwischen 10 µm und 3 mm, noch mehr bevorzugt zwischen 10 µm und 2 mm, noch mehr bevorzugt zwischen 10 µm und 1 mm, noch mehr bevorzugt zwischen 10 µm und 500 µm, noch mehr bevorzugt zwischen 10 µm und 200 µm, noch mehr bevorzugt zwischen 10 µm und 100 µm, noch mehr bevorzugt zwischen 10 µm und 50 µm, noch mehr bevorzugt zwischen 10 µm und 25 µm, noch mehr bevorzugt zwischen 50 µm und 5 mm, noch mehr bevorzugt zwischen 50 µm und 3 mm, noch mehr bevorzugt zwischen 50 µm und 2 mm, noch mehr bevorzugt zwischen 50 µm und 1 mm, noch mehr bevorzugt zwischen 50 µm und 500 µm, noch mehr bevorzugt zwischen 50 µm und 200 µm, noch mehr bevorzugt zwischen 50 µm und 100 µm, noch mehr bevorzugt zwischen 100 µm und 5 mm, noch mehr bevorzugt zwischen 100 µm und 3 mm, noch mehr bevorzugt zwischen 100 µm und 2 mm, noch mehr bevorzugt zwischen 100 µm und 1 mm, noch mehr bevorzugt zwischen 100 µm und 500 µm, noch mehr bevorzugt zwischen 100 µm und 200 µm. Besonders bevorzugt weisen die erfindungsgemäßen Partikel einen Durchmesser bzw. eine Größe von 0,1 µm bis 3 mm, vorzugsweise 0,1 µm bis 25 µm oder 500 µm bis 3 mmm, auf. Der Kern der erfindungsgemäßen Partikel weist vorzugsweise einen Durchmesser bzw. eine Größe zwischen 0,05 µm und 8 mm, noch mehr bevorzugt zwischen 0,05 µm und 5 mm, noch mehr bevorzugt zwischen 0,05 µm und 1 mm, noch mehr bevorzugt zwischen 0,05 und 500 µm, noch mehr bevorzugt zwischen 0,1 µm und 5 mm, noch mehr bevorzugt zwischen 0,1 µm und 1 mm, 0,1 und 500 µm, noch mehr bevorzugt zwischen 0,1 und 400 µm, noch mehr bevorzugt zwischen 0,1 und 300 µm, noch mehr bevorzugt zwischen 0,1 und 200 µm, noch mehr bevorzugt zwischen 0,1 und 100 µm, noch mehr bevorzugt zwischen 0,1 und 50 µm, noch mehr bevorzugt zwischen 0,1 und 20 µm, noch mehr bevorzugt zwischen 0,1 und 10 µm, noch mehr bevorzugt zwischen 0,1 und 5 µm, noch mehr bevorzugt zwischen 0,5 und 400 µm, noch mehr bevorzugt zwischen 0,5 und 300 µm, noch mehr bevorzugt zwischen 0,5 und 200 µm, noch mehr bevorzugt zwischen 0,5 und 100 µm, noch mehr bevorzugt zwischen 0,5 und 50 µm, noch mehr bevorzugt zwischen 0,5 und 20 µm, noch mehr bevorzugt zwischen 0,5 und 10 µm, noch mehr bevorzugt zwischen 0,5 und 5 µm, noch mehr bevorzugt zwischen 1 und 400 µm, noch mehr bevorzugt zwischen 1 und 300 µm, noch mehr bevorzugt zwischen 1 und 200 µm, noch mehr bevorzugt zwischen 1 und 100 µm, noch mehr bevorzugt zwischen 1 und 50 µm, noch mehr bevorzugt zwischen 1 und 20 µm, noch mehr bevorzugt zwischen 1 und 10 µm, noch mehr bevorzugt zwischen 1 und 5 µm, noch mehr bevorzugt zwischen 100 µm und 8 mm, noch mehr bevorzugt zwischen 100 µm und 5 mm, noch mehr bevorzugt zwischen 100 µm und 1 mm, noch mehr bevorzugt zwischen 100 und 500 µm, noch mehr bevorzugt zwischen 400 µm und 8 mm, noch mehr bevorzugt zwischen 400 µm und 5 mm, noch mehr bevorzugt zwischen 400 µm und 1 mm, noch mehr bevorzugt zwischen 400 und 500 µm, noch mehr bevorzugt zwischen 500 µm und 8 mm, noch mehr bevorzugt zwischen 500 µm und 5 mm, noch mehr bevorzugt zwischen 500 µm und 1 mm, noch mehr bevorzugt zwischen 1 mm und 8 mm, noch mehr bevorzugt zwischen 1 mm und 5 mm, noch mehr bevorzugt zwischen 1 mm und 2 mm, auf. Die Dicke der mindestens einen den Kern umhüllenden Schicht beträgt vorzugsweise zwischen 0,1 und 500 µm, noch mehr bevorzugt zwischen 0,1 und 400 µm, noch mehr bevorzugt zwischen 0,1 und 300 µm, noch mehr bevorzugt zwischen 0,1 und 200 µm, noch mehr bevorzugt zwischen 0,1 und 100 µm, noch mehr bevorzugt zwischen 0,1 und 50 µm, noch mehr bevorzugt zwischen 0,5 und 20 µm, noch mehr bevorzugt zwischen 0,5 und 10 µm, noch mehr bevorzugt zwischen 0,5 und 5 µm, noch mehr bevorzugt zwischen 0,5 und 400 µm, noch mehr bevorzugt zwischen 0,5 und 300 µm, noch mehr bevorzugt zwischen 0,5 und 200 µm, noch mehr bevorzugt zwischen 0,5 und 100 µm, noch mehr bevorzugt zwischen 0,5 und 50 µm, noch mehr bevorzugt zwischen 0,5 und 20 µm, noch mehr bevorzugt zwischen 0,5 und 10 µm, noch mehr bevorzugt zwischen 0,5 und 5 µm, noch mehr bevorzugt zwischen 1 und 400 µm, noch mehr bevorzugt zwischen 1 und 300 µm, noch mehr bevorzugt zwischen 1 und 200 µm, noch mehr bevorzugt zwischen 1 und 100 µm, noch mehr bevorzugt zwischen 1 und 50 µm, noch mehr bevorzugt zwischen 1 und 20 µm, noch mehr bevorzugt zwischen 1 und 10 µm, noch mehr bevorzugt zwischen 1 und 5 µm. Die Schichtdicke der Schicht kann mit dem Fachmann bekannten Methoden, beispielsweise Rasterelektronenmikroskopie, bestimmt werden. Der Durchmesser bzw. die Größe der erfindungsgemäßen Partikel bzw. der Kerne dieser Partikel kann mit dem Fachmann bekannten Methoden, beispielsweise Lichtmikroskopie, bestimmt werden. Die erfindungsgemäßen Partikel haben vorzugsweise eine Partikelgrößenverteilung von 0,1 µm und 10 mm, noch mehr bevorzugt wie oben definiert. Die Partikelgrößenverteilung ist so, dass mindestens 50%, vorzugsweise mindestens 70%, noch mehr bevorzugt mindestens 80%, noch mehr bevorzugt mindestens 90%, noch mehr bevorzugt mindestens 95%, insbesondere 100%, der Partikel einen Durchmesser bzw. eine Größe von 0,1 µm und 10 mm, noch mehr bevorzugt wie oben definiert, haben.

Der Kern des erfindungsgemäßen Partikels ist mit einer oder mehreren bzw. mit mindestens einer Schicht umhüllt. Vorzugsweise ist der Kern von mindestens zwei, noch mehr bevorzugt von mindestens drei, noch mehr bevorzugt von mindestens vier, noch mehr bevorzugt von mindestens fünf, noch mehr bevorzugt von mindestens sechs, noch mehr bevorzugt von mindestens sieben, noch mehr bevorzugt von mindestens acht, Schichten umhüllt. Vorzugsweise umfassen die erfindungsgemäßen Partikel höchstens zehn, vorzugsweise höchstens neun, Schichten die den Kern des Partikels umhüllen. Besonders bevorzugt sind Partikel, deren Kern mit zwei bis acht, vorzugsweise mit zwei bis sechs, noch mehr bevorzugt mit drei bis fünf, insbesondere mit vier, Schichten umhüllt ist.

Die erfindungsgemäßen Partikel können verschiedenste Pflanzenschutzwirkstoffe umfassen. Besonders bevorzugt sind dabei Insektizide und Fungizide, wobei es besonders bevorzugt ist, dass der freizusetzende Pflanzenschutzwirkstoff ein Pheromon ist.

Unter dem Begriff "Pheromon", wie hierin verwendet, versteht man schon in äußerst geringen Konzentrationen wirksame Signalstoffe, die der chemischen Verständigung von Organismen einer Art dienen. Pheromone kommen in den Kommunikationssystemen nahezu aller Lebewesen von Einzellern bis zu Säugetieren vor und spielen eine herausragende Rolle als Sexuallockstoff. Vor allem bei der Bekämpfung von Insekten werden häufig Pheromone eingesetzt, um die Paarung der Insekten zu stören, um die Fortpflanzung der Insekten signifikant zu reduzieren.

Pheromone eignen sich besonders gut, um Pflanzenschädlinge zu bekämpfen, da diese in der Regel ungiftige Naturstoffe oder naturnahe synthetische Verbindungen sind. Pheromone werden in einer sehr geringen Menge auf Agrarflächen ausgebracht, verdampfen dort und hinterlassen - im Gegensatz zu anderen häufig eingesetzten Pflanzenschutzwirkstoffen - keine Rückstände. Durch die bevorzugte zusätzliche Verwendung von abbaubaren Pheromonträgern (z.B. Zeolithe, Polysaccharide) stellen die erfindungsgemäßen Partikel keine Umweltbelastung, wie z.B. Neonikotinoide, dar.

Die erfindungsgemäß eingesetzten Pheromone können mit herkömmlichen Verfahren entweder synthetisch oder durch Extraktion aus pheromonhaltigen Ausgangsmaterialien hergestellt bzw. gewonnen werden.

Pheromone können verschiedenste Stoffgruppen aufweisen, wobei sich eine Vielzahl der Pheromone von gesättigten und ungesättigten Kohlenwasserstoffen ableiten lassen. Pheromone können daher Alkane, Alkene, Ether, Ester, Aldehyde oder Ketone mit Kettenlängen von 5 bis 30, vorzugsweise von 10 bis 20, Kohlenstoffresten umfassen und sind daher größtenteils kaum wasserlöslich.

Mit den erfindungsgemäßen Partikeln können pflanzenschädigenden Organismen, wie z.B. Ackerschädlinge oder Obstschädlinge, bekämpft werden. Die Gruppe der Ackerschädlinge umfasst Organismen (z.B. Insekten), die u.a. Kulturpflanzen wie Mais, Reis, Getreide, Baumwolle und Kartoffel schädigen können. Insekten, die mit den erfindungsgemäßen Partikel bzw. mit der erfindungsgemäßen Zusammensetzung bekämpft werden können und Maisschädlinge sind, umfassen den Maiszünsler (*Ostrinia nubilalis*), den Westlichen Maiswurzelbohrer (*Diabrotica virgifera*), den Nördlichen Maiswurzelbohrer (*Diabrotica barberi*), den Südlichen Maiswurzelbohrer (*Diabrotica undecimpunctata howardi*) und den Gepunkteten Maiswurzelbohrer (*Diabrotica undecimpunctata undecimpunctata*). Insekten und Nematoden, die mit den erfindungsgemäßen Partikel bzw. mit der erfindungsgemäßen Zusammensetzung bekämpft werden können und Reisschädlinge sind, umfassen den Gestreiften Reisstängelbohrer (*Chilo suppressalis*), die Gewöhnliche Reiswanze (*Leptocorisa acuta*), die Grüne Reiszikade (*Nephotettix virescens*), die Reisstängelnematode (*Ditylenchus angustus*) und den Reiskäfer (*Sitophilus oryzae*). Insekten, die mit den erfindungsgemäßen Partikel bzw. mit der erfindungsgemäßen Zusammensetzung bekämpft werden können und Getreideschädlinge sind, umfassen den Kornkäfer (*Sitophilus granarius*), die Sattelmücke (*Haplodiplosis equestris*), das Getreidehähnchen (Oulema melanopus), das Kleine Getreidehähnchen (*Oulema gallaeciana*), die Weizengallmücke (*Contarinia tritici* und *Sitodiplosis mosellana*), die Große Getreideblattlaus (*Sitobion avenae*), die Bleiche Getreideblattlaus (*Metopolophium dirhodum*), die Haferblattlaus (*Rhopalosiphum padi*) und die Thripse (*Thysanoptera*). Insekten, die mit den erfindungsgemäßen Partikel bzw. mit der erfindungsgemäßen Zusammensetzung bekämpft werden können und Baumwollschädlinge sind, umfassen den Roten Baumwollkapselwurm (*Pectinophora gossypiella*) und den Baumwollkapselbohrer (*Helicoverpa zea*). Insekten und Nematoden, die mit den erfindungsgemäßen Partikel bzw. mit der erfindungsgemäßen Zusammensetzung bekämpft werden können und Kartoffelschädlinge sind, umfassen die Kartoffelblattläuse (*Myzus persicae* und *Aphis* spp.), die Gelbe Kartoffelzystennematode (*Globodera rostochiensis*) und den Kartoffelkäfer (*Leptinotarsa decemlineata*). Die Gruppe der Obstschädlinge umfasst Organismen (z.B. Insekten), die u.a. Obstpflanzen wie Apfel-, Pflaumen-, Pfirsich- und Kirschbäume, sowie Weinreben schädigen können. Insekten, die mit den erfindungsgemäßen Partikel bzw. mit der erfindungsgemäßen Zusammensetzung bekämpft werden können und Obstschädlinge sind, umfassen den Apfelwickler (*Cydia pomonella*), den Kleinen Frostspanner (*Operophtera brumata*), die Apfel-Gespinstmotte (*Yponomeuta malinellus*), die Pflaumen-Gespinstmotte (*Yponomeuta padella*), die San-Jose-Schildlaus (*Diaspidiotus perniciosus*), den Apfelbaum-Glasflügler (*Synanthedon myopaeformis*), den Pfirsichtriebwickler (*Grapholita molesta*), die Kirschblütenmotte (*Argyresthia pruniella*), den Einbindigen Traubenwickler (*Eupoecilia ambiguella*), den Bekreuzten Traubenwickler (*Lobesia botrana*), den Rebenfallkäfer (*Bromius obscurus*), Springwurmwickler (*Sparganothis pilleriana*), den Gefurchten Dickmaulrüssler (*Otiorhynchus sulcatus*), die Amerikanische Rebenblattlaus (*Aphis illinoisensis*) und die Bläulingszikade (*Metcalfa pruinosa*).

Gemäß einer bevorzugten Ausführungsform der vorliegenden Erfindung ist das Pheromon, welches beispielsweise zur Bekämpfung von Maiswurzelbohrer eingesetzt werden kann, ausgewählt aus der Gruppe bestehend aus 8-Methyl-2-Decanol Propanoat, 10-Methyl-2-Tridecanon, 6,12-Dimethyl Pentadeca-2on, CaprinsäureMethylester, 4-Methoxy-Zimtaldehyd, 2-Phenylethanol, syn-Benzaldoxim, Linalool, β-Caryophyllen, 9-Dodecenylacetat, Periplanon B und Retronecinester.

Weitere geeignete Pheromone sind beispielsweise in "Behavior-Modifying Chemicals for Insect Management: Applications of Pheromones and Other Attractants" (1990, CRC Press, RL Ridgway, RM Silverstein und MN Inscoe) geoffenbart bzw. dem Fachmann hinreichend bekannt (siehe z.B. http://www.pherobase.com/).

Erfindungsgemäß umfasst der Kern und zumindest eine den Kern umhüllende Schicht zumindest einen freizusetzenden Pflanzenschutzwirkstoff. Gemäß einer besonders bevorzugten Ausführungsform der vorliegenden Erfindung umfasst der Kern einen anderen Pflanzenwirkstoff als die mindestens eine den Kern umhüllende Schicht. D.h. der Kern und zumindest eine Schicht wie zuvor definiert umfassen vorzugsweise unterschiedliche Pflanzenschutzwirkstoffe.

Wird der Kern des erfindungsgemäßen Partikels von mehr als einer Schicht zumindest teilweise, vorzugsweise zur Gänze, umhüllt bzw. umgeben, können diese unterschiedliche oder denselben oder dieselben Pflanzenschutzwirkstoffe umfassen. Das Vorsehen unterschiedlicher Pflanzenwirkstoffe in dem erfindungsgemäßen Partikel hat den Vorteil, dass durch die verzögerte Freisetzung einzelner Wirkstoffe der Zeitpunkt der Abgabe eines im erfindungsgemäßen Partikel vorhandenen bestimmten Wirkstoffs gesteuert werden kann. Zunächst werden jene Wirkstoffe an die Umwelt abgegeben, die sich in äußeren Bereichen bzw. Schichten der Partikel befinden. Je länger die erfindungsgemäßen Partikel der Umwelt ausgesetzt werden, desto mehr werden jene Pflanzenschutzwirkstoffe freigesetzt, die sich im Kern oder in den kernnäheren Schichten befinden. Die Pflanzenschutzwirkstoffs, insbesondere Pheromone, die sich im erfindungsgemäßen Partikel befinden, können z.B. durch Verdampfung oder Desorption freigesetzt werden. Auch durch den biologischen oder chemischen Abbau (z.B. durch Hydrolyse oder Oxidation beispielsweise von organischen Anteilen) der Partikel bzw. Teilen davon (Kern, Schichten) können die Pflanzenschutzwirkstoffe aus den Partikeln freigesetzt werden.

Das Vorsehen verschiedener Pflanzenschutzwirkstoffe in verschiedenen Bereichen des Partikels hat den Vorteil, dass einzelne Wirkstoffe - um die Pflanzen effektiver zu schützen - zu unterschiedlichen Zeitpunkten freigesetzt werden. Dadurch können vor allem die unterschiedlichen Lebenszyklen von Insekten bei deren Bekämpfung berücksichtigt werden.

Selbstverständlich können der Kern und mindestens ein den Kern umhüllende Schicht auch denselben Pflanzenschutzwirkstoff umfassen. Durch diese Maßnahme wird gewährleistet, dass ein und derselbe Wirkstoff über einen langen Zeitraum an die Umwelt abgegeben wird.

Gemäß einer bevorzugten Ausführungsform der vorliegenden Erfindung umfasst der Kern und mindestens eine den Kern umhüllende Schicht ein Substrat zur Bindung oder zur Aufnahme des mindestens einen freizusetzenden Wirkstoffs, wobei das Substrat in der Lage ist, den aufgenommenen Wirkstoff zeitlich verzögert abzugeben.

Um die Freisetzung einer oder mehrerer Pflanzenschutzwirkstoffe aus dem Partikel zeitlich über einen langen Zeitraum zu steuern bzw. zu verzögern umfasst sowohl der Kern als auch und mindestens eine den Kern umhüllende Schicht ein Substrat, welches in der Lage ist den oder die Wirkstoffe aufzunehmen und über die Zeit wieder abzugeben. Die Partikel sind dabei so gestaltet, dass das Substrat bzw. die Substrate die Pflanzenschutzwirkstoffe über einen möglichst definierten Zeitraum z.B. von 15 Tagen bis 6 Monaten, insbesondere von 1 bis 3 Monaten, freigesetzt.

Gemäß einer bevorzugten Ausführungsform der vorliegenden Erfindung umfasst der Kern und/oder mindestens eine den Kern umhüllende Schicht ein poröses Substrat und/oder eine makromolekulare Hohlraum umfassende Verbindung.

Poröse Materialien sind besonders bevorzugt, da diese eine relativ große Oberfläche aufweisen, auf der sich eine entsprechend große Menge an Pflanzenschutzwirkstoff adsorbieren lässt. Vorzugsweise weist das poröse Substrat eine Porosität (Verhältnis von Hohlraumvolumen zu Gesamtvolumen) von 10 bis 90%, vorzugsweise von 20 bis 70%, noch mehr bevorzugt von 30 bis 60%, auf.

"Makromolekulare Hohlraum umfassende Verbindungen", wie hierin verwendet, sind Verbindungen, vorzugsweise organische Verbindungen, die in der Lage sind Hohlräume auszubilden. Vorzugsweise ist der gebildete Hohlraum hydrophob und die Außenhülle hydrophil. Beispiele für derartige Verbindungen sind z.B. Cyclodextrine.

Die Porengröße des porösen Substrats beträgt vorzugsweise mindestens 20 nm, vorzugsweise mindestens 40 nm, noch mehr bevorzugt mindestens 50 nm.

Die Porengröße und die Porosität kann mit Quecksilberintrusionsporosimetrie bestimmt werden.

Gemäß einer weiteren bevorzugten Ausführungsform der vorliegenden Erfindung umfasst der Kern und/oder mindestens eine den Kern umhüllende Schicht ein anorganisches poröses Substrat ausgewählt aus der Gruppe bestehend aus mikroporösen Mineralien, vorzugsweise Zeolith, Schichtsilikat, vorzugsweise Tonmineral, und Kombinationen davon.

Gemäß einer bevorzugten Ausführungsform der vorliegenden Erfindung umfasst der Kern und/oder mindestens eine den Kern umhüllende Schicht eine makromolekulare Hohlraum umfassende Verbindung ausgewählt aus der Gruppe bestehend aus Metall-organische Gerüste ("metal-organic frameworks", MOF), makrozyklische Verbindungen, vorzugsweise zyklische Oligosaccharide oder zyklische Polysaccharide, Calixarene, und Kombinationen davon.

Erfindungsgemäß einsetzbare Calixarene sind z.B. in der US 4,699,966 und in der WO 89/08092 beschrieben. Als cyclische Oligosaccharide können Cyclodextrine und/oder deren Derivate eingesetzt werden. Besonders geeignete Cyclodextrine sind alpha-Cyclodextrin, beta-Cyclodextrin oder gamma-Cyclodextrin sowie deren Methyl-, Triacetyl- Hydroxypropyl- oder Hydroxyethylderivate. Als nichtcyclische Oligosaccharide finden beispielsweise Stärken und/oder deren Abbauprodukte Verwendung. Das Substrat oder die Substrate der erfindungsgemäßen Partikel umfassen vorzugsweise mindestens eines (noch mehr bevorzugt mindestens zwei, drei oder vier) der oben genannten Stoffe.

Erfindungsgemäß verwendete mikroporöse Mineralien, vorzugsweise Zeolithe, und Schichtsilikate, vorzugsweise Tonmineralien, sind anorganische Mineralien, welche Poren einer bestimmten Größe aufweisen. Organische Moleküle wie Metall-organische Gerüste ("metal-organic frameworks", MOF), makrozyklische Verbindungen, vorzugsweise zyklische Oligosaccharide, zyklische Polysaccharide und Calixarene weisen Hohlräume auf, in die sich Moleküle, wie die erfindungsgemäßen Pflanzenschutzwirkstoffe, einlagern können. Dabei entsteht eine Art organisches Clathrat. Besonders bevorzugt sind Partikel, deren Kern natürlichen und/oder synthetischen Zeolith umfasst. Die Korngröße des eingesetzten Zeotliths kann variieren, wobei eine Korngröße von 0,1 bis 10 µm, vorzugsweise von 2 bis 5 µm, besonders bevorzugt ist. Zeolithe kommen in der Natur vor oder können synthetisch hergestellt werden. Zeolithe haben die Zusammensetzung Mⁿ⁺_{x/n} [(AlO₂)⁻ₓ (SiO₂)_{y}] z H₂O, wobei n die Ladung des Kations M eines Alkali- oder Erdalkalimetalls ist und meistens 1 oder 2 beträgt, z angibt, wie viele Wassermoleküle vom Kristall aufgenommen wurden. Das molare Verhältnis von SiO₂ zu AlO₂ bzw. y/x in der Summenformel kann aufgrund nicht kleiner als 1 sein.

Bevorzugte synthetische Zeolithe sind Zeolithe ausgewählt aus der Gruppe bestehen aus Zeolith A (Na₁₂[(AlO₂)₁₂(SiO₂)₁₂] · 27 H₂O), Zeolith X (Na₈₆[(AlO₂)₈₆(SiO₂)₁₀₆] · 264 H₂O), Zeolith Y (Na₅₆[(AlO₂)₅₆(SiO₂)₁₃₆] · 250 H₂O), Zeolith L (K₉[(AlO₂)₉(SiO₂)₂₇] · 22 H₂O), Mordenit (Na_{8,7}[(AlO₂)_{8,7}(SiO₂)_{39,3}] · 24 H₂O), ZSM 5 (Na_{0,3}H_{3,8}[(AlO₂)_{4,1}(SiO₂)_{91,9}]), ZSM 11 (Na_{0,1}H_{1,7}[(AlO₂)_{1,8}(SiO₂)_{94,2}]) und Kombinationen davon, wobei Zeolith besonders bevorzugt ist.

Natürliche Zeolithe haben keine allgemein einheitliche Struktur sondern sind in der Regel Mischtypen. Da sich derartige Zeolithe besonders gut eignen um Pflanzenschutzwirkstoffe zeitlich verzögert freizusetzen, sind natürliche Zeolithe besonders bevorzugt.

Alternativ oder zusätzlich können die erfindungsgemäßen Partikel Schichtsilikate umfassen. Als Schichtsilikate (Blattsilikate, Phyllosilikate) bezeichnet man Silikate, deren Silikatanionen aus Schichten eckenverknüpfter SiO₄-Tetraeder bestehen. Diese Schichten oder Doppelschichten sind untereinander nicht über weitere Si-O-Bindungen zu Gerüsten verknüpft. Die Strunz'scher Systematik betrachtet die Silikatringe, aus denen sich die Schichten zusammensetzen und unterteilt die Abteilung der Schichtsilikate (9.E) nach der Zähligkeit dieser Ringe, der Multiplizität der Schichten sowie der Verknüpfung der Schichten durch die oktaedrisch koordinierten Kationen. Gemäß einer bevorzugten Ausführungsform der vorliegenden Erfindung ist das Schichtsilikat ausgewählt aus der Gruppe bestehend aus einfachen Tetraederschichten mit 4-, 5-, (6-), und 8-zähligen Ringen, insbesondere ein Schichtsilikat aus der Apophyllitgruppe, der Okenit-Gruppe oder der Ajoit-Gruppe, Schichtsilikaten mit Glimmertafeln (Dreischichtsilikate) zusammengesetzt aus Tetraeder- und Oktaederschichten, insbesondere ein Schichtsilikat aus der Talk-Gruppe, der Pyrophyllit-Gruppe, der Muskovit-Gruppe, der Phlogopit-Gruppe, der Illit-Gruppe, der Montmorillonit-Gruppe, der Saponit-Gruppe, der Vermiculit-Gruppe oder der Chlorit-Gruppe, Schichtsilikate mit Kaolinit-Schichten (Zweischichtsilikate) zusammengesetzt aus Tetraeder- und Oktaederschichten, insbesondere ein Schichtsilikat aus der Kaolinit-Gruppe, der Halloysit-Gruppe, der Serpentin-Gruppe oder der Bismutoferrit-Gruppe, einfache tetrahedrale Netze aus sechsfach-Ringen verbunden über octahedrale Netze oder Bänder, insbesondere ein Schichtsilikat aus der Palygorskit-Gruppe, der Sepiolith-Gruppe, der Gyrolith-Gruppe, der Makatit-Gruppe oder der Zeophyllit-Gruppe. Besonders bevorzugt ist ein Schichtsilikat ausgewählt aus der Gruppe bestehend aus der Talk-Gruppe, der Muskovit-Gruppe, der Montmorillonit-Gruppe und der Vermiculit-Gruppe.

Gemäß einer weiteren bevorzugten Ausführungsform der vorliegenden Erfindung umfassen die erfindungsgemäßen Partikel, insbesondere deren Kern und/oder Kern-umhüllende Schicht/Schichten, Cyklodextrine. Cyklodextrine sind cyclische Oligosaccharide und stellen ringförmige Abbauprodukte von Stärke dar. Sie bestehen aus α-1,4-glykosidisch verknüpften Glucosemolekülen. Je nach Anzahl der sie aufbauenden Glucoseeinheiten werden die Cyclodextrine unterschiedlich benannt: α-Cyclodextrin umfasst 6 Glucosemoleküle, β-Cyclodextrin umfasst 7 Glucosemoleküle, γ-Cyclodextrin umfasst 8 Glucosemoleküle und δ-Cyclodextrin umfasst 9 Glucosemoleküle. Durch die Fähigkeit der Cyklodextrine Verbindungen mit apolaren organischen Verbindungen einzuschließen besitzt diese Art von Substanzen die Möglichkeit eingeschlossene Substanzen vor umgebenden Verbindungen (z.B. Sauerstoff) zu schützen sowie die eingeschlossenen Substanzen über einen längeren Zeitraum abzugeben.

Cyclodextrine können beispielsweise biotechnologisch durch den enzymatischen Abbau von Stärke hergestellt werden. Die hierfür eingesetzten Enzyme werden als Cyclodextrin-Glycosyltransferasen bezeichnet. Zusätzlich gibt es selektive Enzyme, die jeweils gezielt α-, β- und γ-Cyclodextrin produzieren können. Ferner können Cyclodextrine auch modifiziert sein.

Die Art und Struktur der erfindungsgemäß eingesetzten Cyclodextrine wird vorzugsweise in Hinblick auf die chemische Struktur der Pflanzenschutzwirkstoffe, insbesondere der Pheromone, ausgewählt. Dabei kann das Cyclodextrin so gewählt werden, dass dessen Hohlraumvolumen und/oder dessen Oberflächenaffinität (hydrophob, hydrophil) den physikochemischen Eigenschaften Pflanzenschutzwirkstoff angepasst ist.

Die Substrate der erfindungsgemäßen Partikel, insbesondere deren Kern und/oder Kern-umhüllende Schicht/Schichten, können auch MOF ("metal-organic frameworks"; "Metall-organische Gerüste") umfassen. MOFs sind mikroporöse, kristalline synthetische Materialien mit einem dreidimensionalen Netzwerk, wobei die Strukturen aus metallischen Knotenpunkten und organischen Verbindungselementen bestehen. In diese Strukturen können je nach Metall und Verbindungselement unterschiedlich große Poren konstruiert werden. Dabei bilden sich Gerüste mit Oberflächen bis zu 4.500 m²/g. MOF's können aus Metallnitraten und Trikarbonsäuren in Dialkyl-Formamid synthetisiert werden. Zum Beispiel können 4 Mol Zinknitrat.Hexahydrat mit 3 Mol Terephthalsäure in Diethylformamid vermischt werden und für 24 Stunden bei etwa 100°C inkubiert werden. Daraus ergibt sich sogenanntes MOF-5 mit der Formel Zn₄O(BDC)₃ mit Diethylformamid als Gastmolekül in den Poren. Beim Erhitzen auf über 120°C im Vakuum wird das Gastmolekül freigeben und es verbleiben Poren in der Größe von beispielsweise 6 nm. Analog lassen sich aus anderen Metallnitraten (Al, Mg, Fe...) und Karbonsäuren eine Reihe von MOF's synthetisieren, deren Porenvolumen einstellbar ist. Je nach gewähltem Pflanzenschutzwirkstoff, insbesondere Pheromon, kann somit ein spezifisches MOF ausgewählt werden. Die Einlagerung der Pheromone, z.B., als Gast in den MOF-Wirt geschieht durch Vermischen in organischen Medien, wie Estern oder Ketonen.

Gemäß einer besonders bevorzugten Ausführungsform der vorliegenden Erfindung umfasst das Partikel einen Kern aus einem anorganischen porösen Substrat und mindestens eine den Kern umhüllende Schicht mit einer makromolekularen Hohlraum umfassenden Verbindung.

Besonders bevorzugt ist es, unterschiedliche Substrate in den einzelnen Bereichen der erfindungsgemäßen Partikel einzusetzen. Beispielsweise hat sich gezeigt, dass eine Kombination von Cyclodextrin und Zeolith vorteilhaftere Eigenschaften hinsichtlich der Freisetzung der darin eingeschlossenen bzw. adsorbierten Pflanzenschutzwirkstoffe aufweist, als die Verwendung eines einzigen Substrats. Dies kann darauf zurückzuführen sein, dass die verwendeten Substrate unterschiedliche Eigenschaften hinsichtlich der Freigabe der gebundenen Wirkstoffe aufweisen. Vorzugsweise umfasst der Kern des Partikels beispielsweise ein Zeolith und mindestens eine den Kern umhüllende Schicht Cyclodextrin.

Gemäß einer bevorzugten Ausführungsform der vorliegenden Erfindung ist zwischen dem Kern und der mindestens einen den Kern umhüllenden und Wirkstoff umfassenden Schicht und/oder zwischen zwei den Kern umhüllenden und Wirkstoff umfassenden Schichten mindestens eine Zwischenschicht vorgesehen.

Eine Zwischenschicht wie oben erwähnt dient dazu die einzelnen Bereiche des erfindungsgemäßen Partikels zu trennen bzw. zu isolieren. Eine Zwischenschicht dient somit als Barriere gegenüber der darunterliegenden Schicht bzw. dem darunter befindlichen Kern. Diese Barriere kann Diffusionsvorgänge zwischen den einzelnen Schichten und dem Kern signifikant reduzieren bzw. verhindern. Durch eine chemische Abbaubarkeit der Zwischenschicht kann die Freisetzung der Pflanzenschutzwirkstoffe gesteuert werden. Ein weiterer Vorteil von Zwischenschichten ist die produktionstechnische Abgrenzbarkeit der einzelnen Bereiche der erfindungsgemäßen Partikel, wodurch definierte Schichtstrukturen um den Kern hergestellt werden können.

Die Zwischenschicht umfasst vorzugsweise ein Polymer, vorzugsweise ein modifiziertes oder nicht-modifiziertes Biopolymer, oder ein Schichtmineral.

Die Dicke der mindestens einen Zwischenschicht beträgt vorzugsweise zwischen 0,1 und 500 µm, noch mehr bevorzugt zwischen 0,1 und 400 µm, noch mehr bevorzugt zwischen 0,1 und 300 µm, noch mehr bevorzugt zwischen 0,1 und 200 µm, noch mehr bevorzugt zwischen 0,1 und 100 µm, noch mehr bevorzugt zwischen 0,1 und 50 µm, noch mehr bevorzugt zwischen 0,5 und 20 µm, noch mehr bevorzugt zwischen 0,5 und 10 µm, noch mehr bevorzugt zwischen 0,5 und 5 µm, noch mehr bevorzugt zwischen 0,5 und 400 µm, noch mehr bevorzugt zwischen 0,5 und 300 µm, noch mehr bevorzugt zwischen 0,5 und 200 µm, noch mehr bevorzugt zwischen 0,5 und 100 µm, noch mehr bevorzugt zwischen 0,5 und 50 µm, noch mehr bevorzugt zwischen 0,5 und 20 µm, noch mehr bevorzugt zwischen 0,5 und 10 µm, noch mehr bevorzugt zwischen 0,5 und 5 µm, noch mehr bevorzugt zwischen 1 und 400 µm, noch mehr bevorzugt zwischen 1 und 300 µm, noch mehr bevorzugt zwischen 1 und 200 µm, noch mehr bevorzugt zwischen 1 und 100 µm, noch mehr bevorzugt zwischen 1 und 50 µm, noch mehr bevorzugt zwischen 1 und 20 µm, noch mehr bevorzugt zwischen 1 und 10 µm, noch mehr bevorzugt zwischen 1 und 5 µm.

Gemäß einer besonders bevorzugten Ausführungsform der vorliegenden Erfindung weisen die erfindungsgemäßen Partikel eine hydrophobe Oberflächenbeschichtung auf. Durch die hydrophobe Oberflächenbeschichtung werden die Partikel wasserabweisend. Dadurch sind die in den Partikeln befindlichen Pflanzenschutzwirkstoffe besser gegen eine allfällige Auswaschung (z.B. im Zuge eines Regens) geschützt. Das Vorsehen einer hydrophoben Oberflächenbeschichtung hat allgemein den Vorteil, dass die Freisetzungsrate von Pflanzenschutzwirkstoffen aus dem erfindungsgemäßen Partikel reduziert wird, so dass diese Wirkstoffe über einen längeren Zeitraum an die Umgebung abgegeben werden

Die hydrophobe Oberflächenbeschichtung umfasst vorzugsweise Fettsäureester, Fettsäureamide, Fettsäuresalze oder Polysiloxane.

Die Dicke der hydrophoben Oberflächenbeschichtung beträgt vorzugsweise zwischen 0,1 und 500 µm, noch mehr bevorzugt zwischen 0,1 und 400 µm, noch mehr bevorzugt zwischen 0,1 und 300 µm, noch mehr bevorzugt zwischen 0,1 und 200 µm, noch mehr bevorzugt zwischen 0,1 und 100 µm, noch mehr bevorzugt zwischen 0,1 und 50 µm, noch mehr bevorzugt zwischen 0,5 und 20 µm, noch mehr bevorzugt zwischen 0,5 und 10 µm, noch mehr bevorzugt zwischen 0,5 und 5 µm, noch mehr bevorzugt zwischen 0,5 und 400 µm, noch mehr bevorzugt zwischen 0,5 und 300 µm, noch mehr bevorzugt zwischen 0,5 und 200 µm, noch mehr bevorzugt zwischen 0,5 und 100 µm, noch mehr bevorzugt zwischen 0,5 und 50 µm, noch mehr bevorzugt zwischen 0,5 und 20 µm, noch mehr bevorzugt zwischen 0,5 und 10 µm, noch mehr bevorzugt zwischen 0,5 und 5 µm, noch mehr bevorzugt zwischen 1 und 400 µm, noch mehr bevorzugt zwischen 1 und 300 µm, noch mehr bevorzugt zwischen 1 und 200 µm, noch mehr bevorzugt zwischen 1 und 100 µm, noch mehr bevorzugt zwischen 1 und 50 µm, noch mehr bevorzugt zwischen 1 und 20 µm, noch mehr bevorzugt zwischen 1 und 10 µm, noch mehr bevorzugt zwischen 1 und 5 µm.

Gemäß einer besonders bevorzugten Ausführungsform der vorliegenden Erfindung umfasst der Kern ein Pheromon und ein natürliches Zeolith, vorzugsweise in einem Mengenverhältnis von 0,01 bis 0,1 g, noch mehr bevorzugt 0,04 g, Pheromon pro kg Zeolith. Der Kern ist vorzugsweise von einer Zwischenschicht aus Stärke, vorzugsweise Maisstärke, umgeben. Auf dieser Zwischenschicht befindet sich eine Wirkstoffschicht umfassend Cyclodextrin und einem weiteren Pheromon. Der von Kern, Zwischenschicht und Wirkstoffschicht gebildete Partikel weist vorzugsweise eine hydrophobe Oberflächenbeschichtung (vorzugsweise Kalziumstearat) auf.

Ein weiterer Aspekt der vorliegenden Erfindung betrifft eine Zusammensetzung umfassend Partikel gemäß der vorliegenden Erfindung, wobei die Partikel in einem wässrigen Medium suspendiert sind.

Um die Partikel der vorliegenden Erfindung auf einem Feld, beispielsweise, auszubringen, werden diese in einem wässrigen Medium suspendiert. Vorzugsweise umfasst die Suspension 0,1 bis 10%, noch mehr bevorzugte 0,5 bis 5%, noch mehr bevorzugt 0,5 bis 4%, noch mehr bevorzugt 1 bis 2%, der erfindungsgemäßen Partikel. Als Medium wird vorzugsweise Wasser verwendet, welches idealerweise einen Härtegrad von weniger als 25 deutsche Härtegrade (°dh) und eine pH Wert von 4 bis 9, vorzugsweise von 5 bis 9, noch mehr bevorzugt von 6 bis 8, aufweist.

Gemäß einer bevorzugten Ausführungsform der vorliegenden Erfindung umfasst das wässrige Medium mindestens ein Tensid. Tenside werden dem Medium zugesetzt, um eine vorteilhaftere Dispergierbarkeit der erfindungsgemäßen Partikel im Medium zu ermöglichen. Vorzugsweise ist das verwendete Tensid anionisch, kationisch, nicht-ionisch oder amphoter.

Das Tensid ist vorzugsweise ausgewählt aus der Gruppe bestehend aus Alkylsulfonate, Fettalkoholethersulfonate, Alkylbenzolsulfonate, Fettalkoholethoxylate, quaternäre Ammoniumsalze, Fettalkoholpolyglycolether, Alkylglykoside, Sorbitansäureester, Betaine und Kombinationen davon.

Die erfindungsgemäße Zusammensetzung umfasst mindestens ein Tensid, vorzugsweise mindestens eines der oben genannten Tenside, in einer Konzentration von 0,01 bis 2%, vorzugsweise von 0,01 bis 1 %, noch mehr bevorzugt von 0,01 bis 0,5%.

Ein weiterer Aspekt der vorliegenden Erfindung betrifft die Verwendung der erfindungsgemäßen Partikel oder einer erfindungsgemäßen Zusammensetzung als Pflanzenschutzmittel.

Ein noch weiterer Aspekt der vorliegenden Erfindung betrifft ein Verfahren zur Bekämpfung von pflanzenschädigenden Organismen, insbesondere Insekten (siehe oben), umfassend das in Kontakt Bringen von Pflanzen und/oder des Erdreichs, in der die Pflanzen wachsen, mit einer wirksamen Menge Partikel oder einer Zusammensetzung gemäß der vorliegenden Erfindung.

Die erfindungsgemäßen Partikel bzw. die erfindungsgemäße Zusammensetzung können mit herkömmlichen Verfahren und Mittel ausgebracht werden.

Die Menge an auszubringenden Partikel hängt vom eingesetzten Pflanzenschutzwirkstoff und von den zu bekämpfenden pflanzenschädigenden Organismen, insbesondere Insekten, ab. Erfindungsgemäß ist es bevorzugt soviel Partikel am Feld auszubringen, dass 0,05 bis 50 g Wirkstoff/ha, besonders bevorzugt 0,05 bis 20 g Wirkstoff/ha, besonders bevorzugt 0,05 bis 10 g Wirkstoff/ha, besonders bevorzugt 0,05 bis 5 g Wirkstoff/ha, besonders bevorzugt 0,05 bis 2 g Wirkstoff/ha, besonders bevorzugt 0,05 bis 1 g Wirkstoff/ha, besonders bevorzugt 0,05 bis 0,5 g Wirkstoff/ha, besonders bevorzugt 0,1 bis 50 g Wirkstoff/ha, besonders bevorzugt 0,1 bis 20 g Wirkstoff/ha, besonders bevorzugt 0,1 bis 10 g Wirkstoff/ha, besonders bevorzugt 0,1 bis 5 g Wirkstoff/ha, besonders bevorzugt 0,1 bis 2 g Wirkstoff/ha, besonders bevorzugt 0,1 bis 1 g Wirkstoff/ha, besonders bevorzugt 0,1 bis 0,5 g Wirkstoff/ha, ausgebracht werden, wobei der Wirkstoff vorzugsweise ein Pheromon ist.

Die vorliegende Erfindung wird anhand der folgenden Figuren und Beispiele eingehender dargelegt, ohne jedoch auf diese beschränkt zu sein.

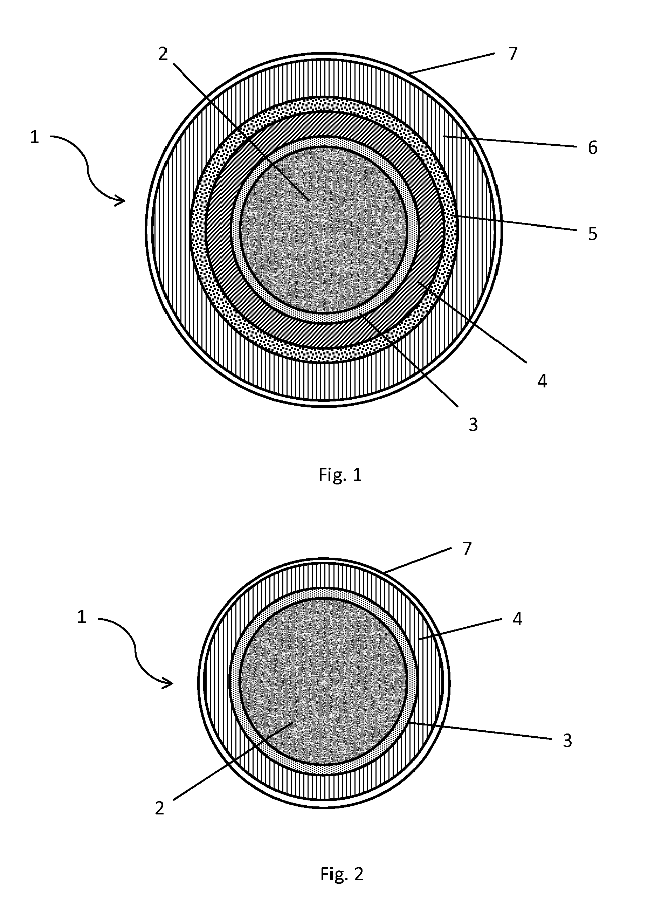

Fig. 1 zeigt ein erfindungsgemäßes Partikel 1 umfassend einen Kern 2 und mehrere den Kern umhüllende Schichten 4 und 6. Der Kern 2 und die Schichten 4 und 6 umfassen mindestens einen Pflanzenschutzwirkstoff, welcher über die Zeit freigesetzt wird. Zwischen dem Kern 2 und der Schicht 4 bzw. zwischen den Schichten 4 und 6 sind Zwischenschichten 3 und 5 vorgesehen, die u.a. eine Diffusion der Pflanzenschutzwirkstoffe zwischen dem Kern 2 und den Schichten 4 und 6 weitestgehend unterbinden soll. An der Außenseite des erfindungsgemäßen Partikels befindet sich vorzugsweise eine Oberflächenbeschichtung 7, die vorzugsweise hydrophob ist.

Fig. 2 zeigt ein weiteres erfindungsgemäßes Partikel 1, welches einen Kern 2, eine den Kern umhüllende Schicht 4, eine zwischen dem Kern 2 und der Schicht 4 befindliche Zwischenschicht und eine Oberflächenbeschichtung 7 umfasst. In dieser zu Fig. 1 alternativen Ausführungsform der vorliegenden Erfindung umfasst das erfindungsgemäße Partikel 1 anstelle von zwei Pflanzenschutzwirkstoff umfassenden Schichten eine Schicht 4, die - wie Kern 2 - ebenfalls einen Pflanzenschutzwirkstoff umfasst.

### BEISPIELE:

### Beispiel 1:

40 kg natürlicher Zeolith wurden mittels einer Prallmühle auf eine Feinheit von durchschnittlich 5 µm gemahlen. Die dabei auftretende Temperatur von bis zu 120°C bewirkte, dass das ursprünglich mit 8,5% Wasser beladene Mineral auf einen Wassergehalt von 2,9% getrocknet wurde. In dieser Phase wurde auf das rotierende Zeolithpulver eine Lösung umfassend 5,0 g Pheromon 1 (Caprinsäuremethylester), gelöst in 2 Liter Ethanol (96%), aufgesprüht, wobei das Lösungsmittel sofort verdampfte und eine gleichmäßige Verteilung des Pheromons auf der Zeolithgesamtmenge erreicht wurde. Das Pheromon wurde sofort in die Porenstruktur und an die Oberfläche des Zeoliths latent gebunden.

Auf dieses Zwischenprodukt wurde 1 Liter einer heißen Lösung (ca. 60°C) von 50 g Maisstärke in Wasser gesprüht, wodurch sich eine isolierende Zwischenschicht bildete. Darauf wurde als zweite Wirkstoffschicht 6,6 g der wässrigen Lösung eines zweiten, wirksamen Pheromons (8-Methyl-2-Decanol Propanoat), 1:1 komplexiert mit Cyklodextrin (siehe Beispiel 2), gesprüht und getrocknet. Nach Zusatz von insgesamt 100 g feinteiligem Kalziumstearat (unter 2 µm) wurde das entstandene Spritzpulver gekühlt und in Polyethylensäcke abgefüllt.

Das feinteilige Pulver ließ sich problemlos in Wasser dispergieren. Diese Menge wurde gleichmäßig auf 10 ha Anbaufläche aufgebracht. Nach 10 Wochen betrug die Rate der unbefruchteten Maiswurzelbohrer-Weibchen etwa 55-60%. Ein Wert, der vergleichbar mit jenem Wert ist, der auch bei Einsatz von hochtoxischen Insektiziden, die zudem in einer oft um den Faktor 100 bis 1000 übersteigenden Menge eingesetzt werden, erreicht wird (Abtötungsrate der relevanten Weibchen). Dies zeigt, dass die Pheromonabgabe und damit die erzielte Verwirrwirkung über den gesamten Zeitraum von 10 Wochen aufrecht blieb.

### Beispiel 2:

Der in Beispiel 1 eingesetzte Pheromonkomplex mit Cyklodextrin wurde wie folgt hergestellt.

0,1 Mol Cyklodextrin 7 (CAVAMAX 7) (Einwaage 114 g) wurden in 2500 ml Wasser bei 60°C gelöst und 0,1 Mol Methyldekanol-yl-Propanoat als Pheromon (wirkt bei Maiswurzelbohrer) zugetropft. Nach etwa einer Stunde wurde der gebildete 1:1-Komplex aus der zwischenzeitlich gekühlten Suspension abfiltriert und mit Wasser gewaschen und anschließend getrocknet. Der feste Komplex enthielt etwa 17% Pheromonwirkstoff.

Dieser Komplex wurde durch Zusatz von anionischen Tensiden wieder in eine lösliche Form gebracht und so zum Aufsprühen auf das Substrat präpariert.

6,6 g des trockenen (7,4g des feuchten) Pheromon/Cyklodextrin-Komplexes wurden mit 0,3 g Natriumdodecylsulfat in 50 ml Wasser suspendiert, anschließend auf 300 ml mit Wasser aufgefüllt und gerührt, bis der Komplex weitgehend in Lösung überging bzw. eine sich nicht mehr absetzende Suspension erhalten wurde. Diese wässrige Pheromonzubereitung wurde gefahrlos (Explosionsgefahr) auf das Substrat gemäß Beispiel 1 gesprüht.

## Patentansprüche

1. Partikel (1) mit steuerbarer Freisetzung eines Pflanzenschutzwirkstoffs, wobei
a) das Partikel (1) einen mit einer oder mehreren Schichten (4, 6) umhüllten Kern (2) aufweist und
b) der Kern (2) und mindestens eine den Kern (2) umhüllende Schicht (4, 6) mindestens einen freizusetzenden Pflanzenschutzwirkstoff umfasst, wobei der Kern (2) und/oder mindestens eine den Kern (2) umhüllende Schicht (4, 6) ein Substrat zur Bindung oder zur Aufnahme des mindestens einen freizusetzenden Wirkstoffs umfasst, wobei das Substrat in der Lage ist, den aufgenommenen Wirkstoff zeitlich verzögert abzugeben.

2. Partikel (1) gemäß Anspruch 1, **dadurch gekennzeichnet, dass** der freizusetzende Pflanzenschutzwirkstoff ein Pheromon ist.

3. Partikel (1) gemäß Anspruch 1 oder 2, **dadurch gekennzeichnet, dass** der Kern (2) und die mindestens eine den Kern (2) umhüllende Schicht (4, 6) unterschiedliche Wirkstoffe umfasst.

4. Partikel (1) gemäß einem der Ansprüche 1 bis 3, **dadurch gekennzeichnet, dass** der Kern (2) und mindestens eine den Kern (2) umhüllende Schicht (4, 6) ein Substrat zur Bindung oder zur Aufnahme des mindestens einen freizusetzenden Wirkstoffs umfasst, wobei das Substrat in der Lage ist, den aufgenommenen Wirkstoff zeitlich verzögert abzugeben.

5. Partikel (1) gemäß einem der Ansprüche 1 bis 4, **dadurch gekennzeichnet, dass** zwischen dem Kern (2) und der mindestens einen den Kern (2) umhüllenden und Wirkstoff umfassenden Schicht (4, 6) und/oder zwischen zwei den Kern (2) umhüllenden und Wirkstoff umfassenden Schichten (4, 6) mindestens eine Zwischenschicht (3, 5) vorgesehen ist.

6. Partikel (1) gemäß Anspruch 5, **dadurch gekennzeichnet, dass** die Zwischenschicht (3, 5) ein Polymer, vorzugsweise ein modifiziertes oder nicht-modifiziertes Biopolymer, oder ein Schichtmineral umfasst.

7. Partikel (1) gemäß einem der Ansprüche 1 bis 6, **dadurch gekennzeichnet, dass** der Kern (2) und/oder mindestens eine den Kern (2) umhüllende Schicht (4, 6) ein poröses Substrat und/oder eine makromolekulare Hohlraum umfassende Verbindung umfasst.

8. Partikel (1) gemäß einem der Ansprüche 1 bis 7, **dadurch gekennzeichnet, dass** der Kern (2) und/oder mindestens eine den Kern (2) umhüllende Schicht (4, 6) ein anorganisches poröses Substrat ausgewählt aus der Gruppe bestehend aus mikroporösen Mineralien, vorzugsweise Zeolith, Schichtsilikat, vorzugsweise Tonmineral, und Kombinationen davon umfasst.

9. Partikel (1) gemäß einem der Ansprüche 1 bis 8, **dadurch gekennzeichnet, dass** der Kern (2) und/oder mindestens eine den Kern (2) umhüllende Schicht (4, 6) eine makromolekulare Hohlraum umfassende Verbindung ausgewählt aus der Gruppe bestehend aus Metall-organische Gerüste ("metal-organic frameworks", MOF), makrozyklische Verbindungen, vorzugsweise zyklische Oligosaccharide oder zyklische Polysaccharide, Calixarene und Kombinationen davon umfasst.

10. Partikel (1) gemäß einem der Ansprüche 1 bis 9, **dadurch gekennzeichnet, dass** der Kern (2) ein anorganisches poröses Substrat und mindestens eine den Kern (2) umhüllende Schicht (4, 6) eine makromolekulare Hohlraum umfassende Verbindung umfasst.

11. Partikel (1) gemäß einem der Ansprüche 1 bis 10, **dadurch gekennzeichnet, dass** das Partikel (1) eine Oberflächenbeschichtung (7), vorzugsweise eine hydrophobe Oberflächenbeschichtung (7), aufweist.

12. Zusammensetzung umfassend Partikel (1) gemäß einem der Ansprüche 1 bis 12, wobei die Partikel (1) in einem wässrigen Medium suspendiert sind.

13. Zusammensetzung gemäß Anspruch 12, **dadurch gekennzeichnet, dass** das wässrige Medium mindestens ein Tensid umfasst.

14. Verwendung eines Partikels (1) gemäß einem der Ansprüche 1 bis 11 oder einer Zusammensetzung gemäß Anspruch 12 oder 13 als Pflanzenschutzmittel.

15. Verfahren zur Bekämpfung von pflanzenschädigenden Organismen umfassend das in Kontakt Bringen von Pflanzen oder des Erdreichs, in der die Pflanzen wachsen, mit einer wirksamen Menge Partikel (1) gemäß einem der Ansprüche 1 bis 11 oder einer Zusammensetzung gemäß Anspruch 12 oder 13.
